# EUROPÄISCHE PATENTSCHRIFT

(11) **EP 2 018 309 B1**
(45) Veröffentlichungstag und Bekanntmachung des Hinweises auf die Patenterteilung: **15.07.2009**
(21) Anmeldenummer: 07726588.2
(22) Anmeldetag: 02.03.2007
(51) Int. Cl.: B62D 5/06, B62D 15/02, B60R 16/08

(54) **LENKSYSTEM FÜR EIN FAHRZEUG**
STEERING SYSTEM FOR A VEHICLE
SYSTEME DE DIRECTION POUR VEHICULE

(30) Priorität: 18.05.2006 DE 102006023240
(43) Veröffentlichungstag der Anmeldung: 28.01.2009
(73) Patentinhaber: ZF-Lenksysteme GmbH, 73527 Schwäbisch Gmünd (DE)
(72) Erfinder: BRAUN, Andreas, 73116 Wäschenbeuren (DE)
(86) Internationale Anmeldenummer: PCT/EP2007/051992
(87) Internationale Veröffentlichungsnummer: WO 2007/134888

(56) Entgegenhaltungen:
- EP-A- 1 568 576
- EP-A2- 1 508 498
- WO-A1-20/04005112
- DE-A1- 19 650 918

## Beschreibung

Die Erfindung betrifft ein Lenksystem für ein Fahrzeug, insbesondere eine Servolenkung für ein Kraftfahrzeug nach dem Oberbegriff des Anspruchs 1.

Die DE 692 26 595 T2 beschreibt eine hydraulische Servolenkung für ein Kraftfahrzeug, wobei solche hydraulischen Servolenkungen eine mit einer Lenkhandhabe drehfest verbundene Eingangswelle und eine mit gelenkten Rädern des Kraftfahrzeugs verbundene Ausgangswelle aufweisen. Die Eingangswelle und die Ausgangswelle sind innerhalb eines Lenkventils über einen Torsionsstab in begrenztem Umfang gegeneinander verdrehbar verbunden. Der Torsionsstab bildet einen Sensor für die Radreaktionskräte der gelenkten Räder. Das Lenkventil steuert die Beaufschlagung von Arbeitsräumen eines Lenkaktuators mit Druckmittel, wobei der Lenkaktuator in Abhängigkeit von dem Betrag und der Richtung des Drehmoments in dem Torsionsstab eine Lenkhilfskraft zur Lenkwinkelverstellung der gelenkten Räder des Kraftfahrzeugs erzeugt.

Bei Ausfall oder bei Stillstand einer Druckmittelpumpe der hydraulischen Servolenkung hat ein Fahrer des Kraftfahrzeuges die gesamte Lenkkraft über die Eingangswelle, den Torsionsstab und die Ausgangswelle auf ein Lenkgetriebe und die gelenk-ten Räder aufzubringen. Die Eingangswelle, der Torsionsstab, die Ausgangswelle und ein Lenkgetriebe, sowie Radlenkhebel und eine Spurstange bilden eine Lenkwinkel-übertragseinrichtung.

Die DE 42 13 589 C2 beschreibt eine Einrichtung zum Stillsetzen eines Fahrmotors eines Kraftfahrzeugs um bei bestimmten Betriebszuständen des Fahrmotors zum Zwecke der Kraftstoffeinsparung diesen abzuschalten. Dies erfolgt durch Trennung des Fahrmotors mittels einer automatisch betätigten Kupplung von einer Schwungmasse. Die Drehzahlschwankungen einer Brennkraftmaschine ohne Schwung-massenausausgleich genügen um die Brennkraftmaschine stillzusetzen. Dies kann auch durch Unterbrechen der Kraftstoffzufuhr und/oder der Zündung des Fahrmotors unterstützt werden. Ein Wiederanlassen erfolgt durch Schließen der Kupplung, wobei die drehende Schwungmasse die Kurbelwelle des Fahrmotors in Drehung versetzt. Die Betätigung der Kupplung zwischen Kurbelwelle und Schwungmasse erfolgt mit einer gewissen Zeitverzögerung um unterschiedliche fahrerabhängige Betätigungsgewohnheiten auszugleichen. Insbesondere, wenn solch ein Kraftfahrzeug mit einer hydraulischen Hilfskraftlenkung ausgestattet ist, ist deren Druckmittelpumpe bei abgeschaltetem Fahrtmotor nicht in der Lage einen Lenkaktuator zur Bereitstellung einer Lenkhilfskraft mit Druckmittel zu versorgen. In abgeschaltetem Zustand des Fahrmotors wirkt daher unter Umständen ein hohes Lenkmoment an der Lenkhandhabe solcher Kraftfahrzeuge. Es kann dabei vorkommen, dass ein Fahrer nicht mehr in der Lage ist; die Lenkhandhabe zu halten, oder die sich unter Umständen rasch drehende Lenkhandhabe führt zu Beeinträchtigungen des Fahrers.

Der Erfindung liegt die Aufgabe zugrunde, ein Lenksystem für ein Fahrzeug anzugeben, das einen Start-Stopp-Betrieb eines Fahrmotors des Fahrzeugs erlaubt, ohne dass hohe Kräfte an der Lenkhandhabe des Lenksystems wirken.

EP 1 508 498 beschreibt ein Lenksystem gemäss dem Oberbegriff des Anspruchs 1.

Die Aufgabe wird mit einem Lenksystem mit den Merkmalen des Anspruchs 1 gelöst.

Dadurch dass das Lenksystem und insbesondere dessen Lenkwinkelübertragungseinrichtung einen von einer Steuer- und/oder Regelungseinrichtung angesteuerten Aktuator aufweist, der den Lenkwinkel der lenkbaren Räder beim oder kurz nach dem Abstellen des Fahrmotors um einen Korrekturbetrag so verstellt, oder ein Zusatzmoment, das in Betrag und Richtung etwa gleich mit einem Lenk-Hilfsmoment eines Lenkaktuators des Lenksystems ist, in die Lenkwinkelübertragungseinrichtung eingibt, sind die Kräfte an der Lenkhandhabe bei abgestelltem Fahrmotor und Fahrzeug gering oder gleich Null. Der Aktuator wird von einem Sensor, der die Radreaktions-kräfte der gelenkten Räder direkt oder indirekt angibt über die Steuer- und/oder Regelungseinrichtung angesteuert.

Bevorzugte Ausführungen ergeben sich aus den Unteransprüchen.

Beim erneuten Starten des Fahrmotors wird der Korrekturbetrag des Lenkwinkels wieder vorzugsweise schrittweise oder verzögert so zurückgenommen, dass die lenkbaren Räder des Kraftfahrzeugs vor der Beschleunigung des Fahrzeugs wieder ihre Position einnehmen, die sie vor dem Abstellen des Fahrmotors eingenommen hatten.

Wird von dem Aktuator und der Steuer- und/oder Regelungseinrichtung anstatt eines Korrekturbetrages des Lenkwinkels ein Zusatzmoment, das insbesondere in Betrag und Richtung identisch wie das von dem Lenkaktuator bereitgestellte Lenkhilfsmoment ist, in die Lenkwinkelübertragungseinrichtung eingegeben, so kann es zweckmäßig sein, eine gewisse Zeit nach Abstellen des Fahrmotors das Zusatzmoment des insbesondere als Elektromotor gebildeten Aktuators zurückzunehmen und über eine vorzugsweise als Rampenfunktion ausgeführtes Verfahren zu Null abzusenken.

Das erfindungsgemäße Lenksystem eignet sich insbesondere bei hydraulischen Hilfskraftlenkungen mit mechanischer Redundanzebene. Es ist aber auch bei mechanischen, elektrischen und auch bei elektrohydraulischen Hilfskraftlenkungen einsetzbar. Die Radreaktionskräfte des lenkbaren Rades werden dabei von einem Kraft- und/oder Drehmomentsensor in der Lenkwinkelübertragungseinrichtung gemessen. Ist das Lenksystem als hydraulische oder elektrohydraulische Servolenkung ausgebildet, so kann es zweckmäßig sein, die Radreaktionskräfte des lenkbaren Rades von einem Drucksensor für das Druckmittel zu ermitteln.

Ist das Lenksystem als elektrisches Servolenksystem ausgebildet, so ist es zweckmäßig, die Radreaktionskräfte des lenkbaren Rades durch eine Strommesseinrichtung für den Ansteuerstrom des Aktuators des Lenksystems zu bestimmen.

Insbesondere bei elektrohydraulischen Hilfskraftlenkungen oder steer-by-wire-Frend-kraftlenkungen sind aufgrund deren Funktionsweise andere Lösungen zur Reduktion der Betätigungskräfte der Lenkhandhabe bei abgestelltem Fahrmotor denkbar.

Es kann zweckmäßig sein die durch das erfindungsgemäße Lenksystem dargestellte Komfortfunktion der Reduktion der Betätigungskräfte an der Lenkhandhabe in einer Überlagerungslenkung anzuwenden. Überlagerungslenkungen zeichnen sich durch ein Überlagerungsgetriebe aus, das in der Lage ist ein variables Übertragungsverhätnis einer Eingangswelle zu einer Ausgangswelle darzustellen, indem ein Stellmotor insbesondere unter Berücksichtigung von Fahrt- und Fahrzeugparametern auf das Überlagerungsgetriebe wirkt. Eine Lenkwelle stellt dabei mit ihren Endabschnitten die Eingangswelle und Ausgangswelle dar.

Die Lenkhandhabe ist mit der Eingangswelle wirkverbunden und die Ausgangswelle des Überlagerungsgetriebes ist mit gelenkten Rädern des Fahrzeugs wirkverbunden. Der Stellmotor der Überlagerungslenkung kann gleichzeitig als Aktuator zur Eingabe des Korrekturbetrages des Lenkwinkels beim oder nach dem Abstellen des Fahrmotors herangezogen werden. Der Korrekturbetrag des Lenkwinkels ist durch die Phasendifferenz der Endabschnitte der Lenkwelle oder der durch sie definierte Ein-gangs- und Ausgangswelle definiert. Der Aktuator zur Darstellung des Zusatzmoments oder des Korrekturbetrages des Lenkwinkels kann insbesondere in Abhängigkeit von der Bauart des Lenksystems ein elektrischer oder hydraulischer Aktuator sein.

Die Erfindung wird nun näher anhand eines Ausführungsbeispiels beschrieben und anhand der beiliegenden Zeichnung wiedergegeben.

Fig. 1 zeigt ein schematisches Schaltbild eines Lenksystems mit einem Aktuator zum Aufbringen eines Korrekturbetrags des Lenkwinkels,

Fig. 2 zeigt ein schematisches Schaltbild eines Lenksystems mit einem Aktuator zum Aufbringen eines Zusatzmoments.

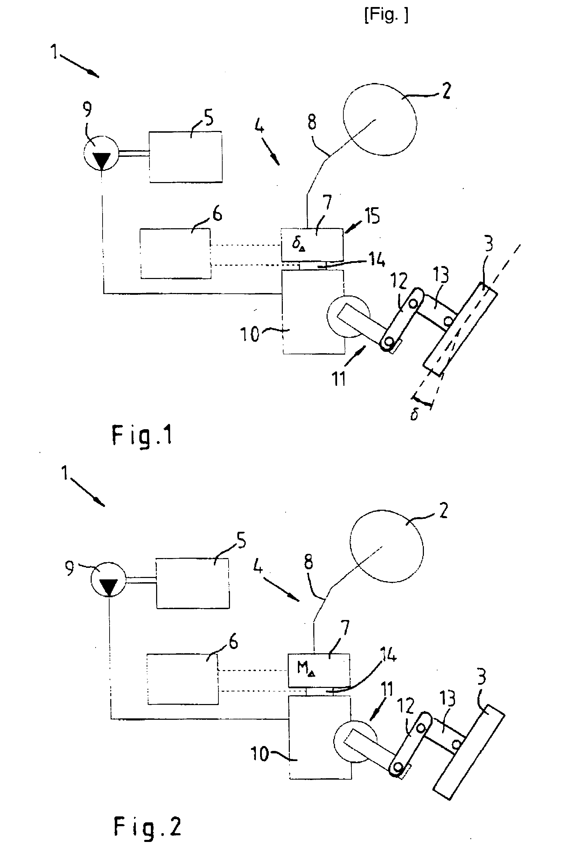

In Fig. 1 ist ein schematisches Schaltbild eines Lenksystems 1 gezeigt, das als hydraulische Hilfskraftlenkung eines Personenkraftwagens gebildet ist. Die hydraulische Hilfskraftlenkung besteht im Wesentlichen aus einer Druckmittelförderpumpe 9 die von einem Fahrmotor 5 des Personenkraftwagens angetrieben ist und Druckmittel, wie Hydraulikd an/von einem Lenkaktuator in einem Lenkgetriebegehäuse 10 fördert.

In dem Lenkgetriebegehäuse 10 ist in an sich bekannter Weise ein Lenkventil, der Lenkaktuator und eine mechanische, getriebliche Koppelung eines Ritzels an einer Lenkwelle 8 mit einem Abtrieb 11 angeordnet. Der Abtrieb 11, welcher ein Lenkstockhebel sein kann, ist gelenkig über eine Spurstange 12 mit einem Radlenkhebel 13 mit dem gelenkten Rad 3 verbunden. Die Lenkwelle 8 ist drehfest mit einer als Lenkrad gebildeten Lenkhandhabe 2 verbunden. Die Lenkwelle 8, das Lenkgetriebegehäuse 10 mit seinen darin aufgenommenen Komponenten und die Spurstange 12 und Radlenkhebel 13 bilden eine Lenkwinkelübertragungseinrichtung 4.

Beim Abstellen des Fahrmotors 5 wird die Lenkhelfkraft des Lenkaktuators in dem Lenkgetriebegehäuse 10 zu Null und die Radreaktionskräfte des gelenkten Rads 3 werden über die Lenkwelle 8 auf die Lenkhandhabe 2 überragen. Um Beeinträchtigungen des Fahrkomforts des Fahrers dadurch zu vermeiden ist eine Steuer-und/oder Regelungseinrichtung 6 vorgesehen, die einen elektrischen Aktuator 7 in Abhängigkeit von Messwerten eines Drehmomentsensors 14 an der Lenkwelle 8 ansteuert. Der Aktuator 7 verstellt dabei über eine Winkelüberlagerungseinrichtung 15 den Lenkwinkel δ um einen Korrekturbetrag δ_{Δ} so lange, bis von dem gelenkten Rad 3 keine nennenswerten Radreaktionskräfte und damit Drehmomente in der Lenkwelle 8 mehr auftreten. Beim erneuten Starten des Fahrmotors 5 wird der Korrekturbetrag δ_{Δ} des Lenkwinkels δ schrittweise zurückgenommen um eine Schiefstellung des Lenkrades zu vermeiden.

In Fig. 2 ist in einem schematischen Schaltbild ein als hydraulische Hilfskraftlenkung ausgebildetes Lenksystem 1 eines Personenkraftwagens gezeigt. Für gleiche Bauteile gelten dieselben Bezugszeichen wie in Fig. 1.

Anstelle eines Korrekturbetrages δ_{Δ} des Lenkwinkels stellt der elektrische Aktuator 7 ein Zusatzmoment M_{Δ} auf die Lenkwelle 8 bereit, sobald der Fahrmotor 5 des Personenkraftwagens abgestellt wird. Das Zusatzmoment M_{Δ} ist in Betrag und Richtung identisch mit dem Lenk-Hilfsmoment der hydraulischen Hilfskraftlenkung das kurz vor Abstellen des Fahrmotors 5 aufgebracht wurde. Nach einer definierten Zeit kann dieses Zusatzmoment M_{Δ} über eine Rampenfunktion von der Steuer- und/ oder Regelungseinrichtung 6 auf Null zurückgefahren werden. Somit findet während und eine gewisse Zeit nach dem Abstellen des Fahrmotors keine Beeinträchtigung des Fahrers über unzulässig hohe Lenkmomente an der Lenkhandhabe 2 statt.

## Patentansprüche

1. Lenksystem für ein Fahrzeug, insbesondere Servolenkung für ein Kraftfahrzeug, mit einer Lenkhandhabe (2), die mit zumindest einem lenkbaren Rad (3) des Fahrzeugs über eine Lenkwinkelübertragungseinrichtung (4) wirkverbunden ist, mit einem Sensor zur Messung der Radreaktionskräfte des lenkbaren Rades (3) und mit einer Einrichtung zur Stillsetzung eines Fahrmotors (5) des Fahrzeugs, wobei die Lenkwinkelübertragungseinrichtung (4) des Lenksystems (1) einen von einer Steuer- und/oder Regelungseinrichtung (6) nach Maßgabe der Messwerte des Sensor zur Messung der Radreaktionskräfte angesteuerten Aktuator (7) aufweist, der den Lenkwinkel (δ) des lenkbaren Rades (3) beim Abstellen des Fahrmotors (5) um einen Korrekturbetrag (δ_{Δ}) verstellt oder ein Zusatzmoment (M_{Δ}), das in Betrag und Richtung etwa gleich mit einem Lenk-Hilfsmoment eines Lenkaktuators des Lenksystems (1) ist, in die Lenkwinkelübertragungseinrichtung (4) eingibt, sodass die Kräfte an der Lenkhandhabe (2) verringert oder etwa gleich Null sind, **dadurch gekennzeichnet, dass** beim Starten des Fahrmotors (5) der Korrekturbetrag (δ_{Δ}) des Lenkwinkels (δ) von dem Aktuator (7) wieder beseitigt wird oder dass nach dem Abstellen des Fahrmotors (5) das Zusatzmoment (M_{Δ}) des Aktuators (7) auf Null zurückgeführt wird.

2. Lenksystem nach Anspruch 1 wenn das Zusatzmoment des Aktuators (7) auf Null zurückgeführt wird, **dadurch gekennzeichnet, dass** das Zusatzmoment (M_{Δ}) über eine Rampenfunktion auf Null zurückgefahren wird.

3. Lenksystem nach einem der Ansprüche 1 und 2, **dadurch gekennzeichnet, dass** das Lenksystem (1) eine hydraulische oder eine elektrische oder eine elektrohydraulische Hilfskraftlenkung ist und die Radreaktionskräfte des lenkbaren Rades (3) von einem Kraft- und/oder einem Drehmomentsensor in der Lenkwinkelübertragungseinrichtung (4) gemessen sind und/oder von einem Drucksensor für das Druckmittel der hydraulischen Hilfskraftlenkung und/oder von einer Strommesseinrichtung für den Ansteuerstrom der elektrischen Hilfskraftlenkung ermittelt werden.

4. Lenksystem nach einem der Ansprüche 1 bis 3, **dadurch gekennzeichnet, dass** das Lenksystem (1) ein steer-by-wire-Lenksystem ist.

5. Lenksystem nach einem der Ansprüche 1 bis 4, **dadurch gekennzeichnet, dass** das Lenksystem (1) eine Überlagerungslenkung ist.

6. Lenksystem nach Anspruch 5, **dadurch gekennzeichnet, dass** der Aktuator (7) zum Aufbringen des Korrekturbetrages (δ_{Δ}) des Lenkwinkels (δ) der Aktuator der Überlagerungslenkung zur Darstellung einer Phasendifferenz zwischen Endabschnitten einer durch ein Überlagerungsgetriebe miteinander verbundenen Lenkwelle (8) ist.

7. Lenksystem nach einem der Ansprüche 1 bis 6, **dadurch gekennzeichnet, dass** der Aktuator (7) zur Darstellung des Zusatzmomentes (M_{Δ}) oder des Korrekturbetrages (δ_{Δ}) des Lenkwinkels (δ) ein elektrischer oder hydraulischer Aktuator ist.

## Claims

1. Steering system for a vehicle, in particular a power steering system for a motor vehicle, having a steering handle (2) which is operatively connected to at least one steerable wheel (3) of the vehicle via a steering-angle transmission device (4), having a sensor for measuring the wheel reaction forces of the steerable wheel (3), and having a device for stopping a traction engine (5) of the vehicle, the steering-angle transmission device (4) of the steering system (1) having an actuator (7) which is actuated by a control and/or regulating device (6) according to the measured values of the sensor for measuring the wheel reaction forces, and adjusts the steering angle (δ) of the steerable wheel (3) by a correction amount (δ_{Δ}) when the traction engine (5) is switched off, or inputs an additional moment (M_{Δ}) into the steering-angle transmission device (4), which additional moment (M_{Δ}) is approximately equal in terms of magnitude and direction to a steering auxiliary moment of a steering actuator of the steering system (1), with the result that the forces at the steering handle (2) are reduced or are approximately equal to zero, **characterized in that,** during starting of the traction engine (5), the correction amount (δ_{Δ}) of the steering angle (δ) is eliminated again by the actuator (7), or **in that**, after the traction engine (5) is switched off, the additional moment (M_{Δ}) of the actuator (7) is returned to zero.

2. Steering system according to Claim 1, if the additional moment of the actuator (7) is returned to zero, **characterized in that** the additional moment (M_{Δ}) is returned to zero via a ramp function.

3. Steering system according to either of Claims 1 and 2, **characterized in that** the steering system (1) is a hydraulic or electric or electrohydraulic power assistance steering system, and the wheel reaction forces of the steerable wheel (3) are measured by a force and/or torque sensor in the steering-angle transmission device (4) and/or are determined by a pressure sensor for the pressure medium of the hydraulic power assistance steering system and/or by a current-measuring device for the actuating current of the electric power assistance steering system.

4. Steering system according to one of Claims 1 to 3, **characterized in that** the steering system (1) is a steer-by-wire steering system.

5. Steering system according to one of Claims 1 to 4, **characterized in that** the steering system (1) is a superimposed steering system.

6. Steering system according to Claim 5, **characterized in that** the actuator (7) for applying the correction amount (δ_{Δ}) of the steering angle (δ) is the actuator of the superimposed steering system for representing a phase difference between end sections of a steering shaft (8) connected together by a variable-ratio gear unit.

7. Steering system according to one of Claims 1 to 6, **characterized in that** the actuator (7) for representing the additional moment (M_{Δ}) or the correction amount (δ_{Δ}) of the steering angle (δ) is an electric or hydraulic actuator.

## Revendications

1. Système de direction pour un véhicule, en particulier servodirection pour véhicule automobile, doté d'un volant de direction (2) relié fonctionnellement à au moins une roue directrice (3) du véhicule par l'intermédiaire d'un dispositif (4) de transmission d'angle de direction, d'un détecteur de mesure des forces de réaction de la roue directrice (3) et d'un dispositif de mise à l'arrêt du moteur (5) d'entraînement du véhicule,
le dispositif (4) de transmission d'angle de direction du système de direction (1) présentant un actionneur (7) commandé par un dispositif (6) de commande et/ou de régulation en fonction des valeurs de mesure du détecteur de mesure des forces de réaction des roues, qui ajuste d'une valeur de correction (δ_{Δ}) l'angle de direction (δ) de la roue directrice (3) lors de la mise à l'arrêt du moteur d'entraînement (5) ou qui introduit dans le dispositif (4) de transmission d'angle de direction un couple supplémentaire (M_{Δ}) dont la valeur et la direction sont sensiblement égales à celles d'un couple auxiliaire de direction d'un actionneur de direction du système de direction (1), de sorte que les forces exercées sur le volant de direction (2) sont diminuées ou rendues sensiblement égales à zéro,
**caractérisé en ce que**
la valeur de correction (δ_{Δ}) de l'angle de direction (δ) est de nouveau éliminée par l'actionneur (7) lors du démarrage du moteur d'entraînement (5) ou **en ce que** le couple supplémentaire (M_{Δ}) de l'actionneur (7) est ramené à zéro après la mise à l'arrêt du moteur d'entraînement (5).

2. Système de direction selon la revendication 1, **caractérisé en ce que** lorsque le couple supplémentaire de l'actionneur (7) est ramené à zéro, le couple supplémentaire (M_{Δ}) est ramené à zéro par une fonction en pente.

3. Système de direction selon l'une des revendications 1 et 2, **caractérisé en ce que** le système de direction (1) est une direction assistée hydraulique, électrique ou électro-hydraulique et **en ce que** les forces de réaction de la roue directrice (3) sont mesurées par un détecteur de force et/ou un détecteur de couple de rotation prévu dans le dispositif (4) de transmission d'angle de rotation et/ou sont déterminées par un détecteur de pression du fluide sous pression de la direction assistée hydraulique et/ou par un dispositif de mesure du courant de commande de la direction assistée électrique.

4. Système de direction selon l'une des revendications 1 à 3, **caractérisé en ce que** le système de direction (1) est un système de direction à commande transmise par fils.

5. Système de direction selon l'une des revendications 1 à 4, **caractérisé en ce que** le système de direction (1) est une direction à superposition.

6. Système de direction selon la revendication 5, **caractérisé en ce que** l'actionneur (7) qui applique la valeur de correction (δ_{Δ}) de l'angle de direction (δ) est l'actionneur de la direction à superposition qui représente un déphasage entre les parties d'extrémité d'un essieu directeur (8) reliées l'une à l'autre par une transmission à superposition.

7. Système de direction selon l'une des revendications 1 à 6, **caractérisé en ce que** l'actionneur (7) qui représente le couple supplémentaire (M_{Δ}) ou la valeur de correction (δ_{Δ}) de l'angle de direction (δ) est un actionneur électrique ou un actionneur hydraulique.
